# EUROPEAN PATENT SPECIFICATION

(11) **EP 2 877 042 B1**
(45) Date of publication and mention of the grant of the patent: **05.09.2018**
(21) Application number: 13742127.7
(22) Date of filing: 17.07.2013
(51) Int. Cl.: A23K 50/40, A23L 3/3463, A23L 3/3571, A23K 40/20, A23K 40/30, A23B 7/16, A23K 10/18, A23K 40/25

(54) **BACTERIOPHAGE COATED FOOD PRODUCTS**
MIT BAKTERIOPHAGEN BESCHICHTETE LEBENSMITTEL
PRODUITS ALIMENTAIRES RECOUVERTS DE BACTERIOPHAGES

(30) Priority: 25.07.2012 US 201213557828
(43) Date of publication of application: 03.06.2015
(73) Proprietor: The Iams Company, Cincinnati, OH 45202 (US)
(72) Inventor: TERHAAR, Robbert, H., Cincinnati, Ohio 45202 (US); HANNA, Leigh, Cincinnati, Ohio 45202 (US)
(74) Representative: Schiweck Weinzierl Koch Patentanwälte Partnerschaft mbB
(86) International application number: PCT/US2013/050829
(87) International publication number: WO 2014/018327

(56) References cited:
- US-A1- 2007 077 334
- US-A1- 2008 038 322
- US-A1- 2009 246 336

## Description

### FIELD OF THE INVENTION

This disclosure relates to food products treated with a bacteriophage.

### BACKGROUND OF THE INVENTION

Food-borne illness is a significant problem. In the United States alone, the Centers for Disease Control " estimates that each year roughly 1 in 6 Americans (or 48 million people) gets sick, 128,000 are hospitalized, and 3,000 die of foodbome diseases." Estimates of Foodborne Illness in the United States, www.cdc.gov/foodborneburden/index.html, last visited July 22, 2012. Foodborne illness can be caused by a variety of microbes, including protozoa, bacteria, viruses, and fungi. Historically, risk reduction efforts have focuses on cleanliness, like washing food ingredients, hand-washing for people handling food products, and sanitizing food preparation surfaces and equipment. These procedures are effective when used properly, however, their application to a modem food chain may require compliance by a variety of individuals in different facilities at different locations. Relatively minor deviations from safe food handling procedures at any one touch point can undermine the preventive actions taken throughout the rest of the chain. This is true for raw foods, such as fruits, vegetables, and meats, as well as processed or prepared foods, such as cookies, crackers, biscuits, pet food, and the like.

Recently, there has been interest in using bacteriophages to reduce the risk of foodbome illness caused by bacteria. Bacteriophages are virus-like particles that selectively infect certain kinds of bacteria, with different bacteriophages infecting different kinds of bacteria. A "lytic" bacteriophage causes the rupture and death of infected bacteria. Bacteriophages do not infect eukaryotic cells, and are therefore harmless to plants and animals, including humans. Despite the potential for bacteriophages to reduce the risk of foodbome illness by reducing bacterial load in food products, they have not been widely adopted in the food industry. This is in part due to the difficulty of using bacteriophages effectively.

US2009246336 (A1) discloses a system and method for reducing or preventing bacterial contamination in food includes application of a bacteriophage treatment to any type of food product at any stage of processing the food product. US2007077334 (A1) discloses a process of coating an animal feed to obtain a coated animal feed product. The process includes the step of applying a first coating to the animal feed, wherein the first coating comprises at least 20% by weight of sugar selected from the group consisting of monosaccharide, disaccharide, and any combination thereof in any proportion. The process also includes the step of applying a second coating to the animal feed, wherein the second coating comprises at least 20% by weight of phospholipid. US2008038322 (A1) discloses stabilized bacteriophage compositions, and methods for preparing stabilized bacteriophage compositions.

Applying bacteriophages using conventional processes, such as spraying or misting, has tended to produce less reduction in pathogenic bacteria counts than desired. Dipping or bathing foods in bacteriophages is still expected to be effective; however, some food products are not amenable to dipping or bathing in an aqueous solution. There remains a need for bacteriophage treated food, and a process for treating food with bacteriophage that effectively reduces or prevents pathogenic bacterial growth on the food.

### SUMMARY OF THE INVENTION

The invention relates to a food treated with a bacteriophage, the treated food comprising: a food product; a first, fatty or waxy coating layer on the food product; and a second coating layer comprising one or more bacteriophage strains, wherein the fatty or waxy coating layer is distinct from the coating layer comprising the one or more bacteriophage strains, wherein the coating layer comprising the one or more bacteriophage strains is the outermost coating layer on the food.

The invention further relates to a method for applying bacteriophage to a food, the method comprising: providing a food; providing a coating solution comprising one or more bacteriophage strains; applying a hydrophobic, fatty or waxy coating layer before contacting the coating solution with the food; and subsequently contacting the coating solution with the food to create a coated food surface; and rubbing the coated food surface to distribute the bacteriophage strains across the coated food surface.

In some aspects of the disclosure, a food is treated with a bacteriophage. The treated food comprises a food product. The treated food comprises a first, fatty or waxy coating layer on the food product. The treated food comprises a second coating layer comprising one or more bacteriophage strains. The fatty or waxy coating layer is distinct from the coating layer comprising the one or more bacteriophage strains. The coating layer comprising the one or more bacteriophage strains is the outermost coating layer on the food. The food may comprise a third coating layer. The third coating layer may comprise one or more bacteriophage strains. The third coating layer may be disposed on top of the first coating layer. The food may be a pet food.

At least one of the one or more bacteriophage strains may be of the family Siphoviridae, Podoviridae, or Myoviridae. At least one of the one or more bacteriophage strains may be infective and harmful with respect to at least one species or strain of bacteria of a genus selected from the group consisting of *Streptococcus, Enterobacterium, Escherichia, Salmonella, Listeria, Shigella, Campylobacter* and combinations thereof. At least one of the one or more bacteriophage strains may be of the family Myoviridae and infective and harmful with respect to at least one species or strain of *Salmonella* bacteria. The coating comprising the one or more bacteriophage strains may have a pH between 2 and 10. The food may comprise a coating layer comprising animal digest or acid, and the animal digest or acid may be separate from or not within the coating layer comprising the one or more bacteriophage strains.

In some aspects, the disclosure relates to a method for applying bacteriophage to a food. The method comprises providing a food. The method comprises providing a coating solution comprising one or more bacteriophage strains. The method comprises applying a hydrophobic, fatty or waxy coating layer before contacting the coating solution with the food. The method comprises subsequently contacting the coating solution with the food to create a coated food surface. The method comprises rubbing the coated food surface to distribute the bacteriophage strains across the coated food surface. The rubbing may be performed by mixing a plurality of pieces of coated food such that the coated food surfaces rub together.

The rubbing and/or contacting may be performed in a vibrating conveyor. The vibrating conveyor may be operated to provide a dimensionless acceleration number greater than about 0.3. The vibrating conveyor may be operated to provide an average vertical amplitude of vibration between about 3mm and about 20mm. The vibrating conveyor may be operated to provide a Peclet number greater than about 100. The contacting may be performed by fog-misting, aerosol spraying, or a combination thereof. The food may be a pet food or a pet food kibble.

At least one of the one or more bacteriophage strains may be of the family Myoviridae. At least one of the one or more bacteriophage strains may be infective and harmful with respect to at least one species or strain of bacteria. At least one of the one or more bacteriophage strains may be infective and harmful with respect to at least one species or strain of *Salmonella* bacteria.

### BRIEF DESCRIPTION OF THE DRAWINGS

Fig. 1A is a schematic representation of a bacteriophage-treated food surface in accordance with some exemplary embodiments of the invention.
Fig. IB is a schematic representation of a bacteriophage-treated food surface prepared using a common, conventional process.
Fig. 2 is a side view of an exemplary, spiral, vibrating conveyor.
Fig. 3 is a top view of an exemplary, spiral, vibrating conveyor.

### DETAILED DESCRIPTION OF THE INVENTION

As used herein, "kibble" or "dry kibble" refers to an extruded food product with a moisture level less than or equal to 15%, by weight of the food product. "Semi-moist" refers to a food product with a moisture level between 15% and 50%, by weight of the food product. "Wet" refers to a food product having a moisture content equal to or greater than 50%, by weight of the food. Semi-moist or wet foods may be prepared at least in part using extrusion cooking, or may be prepared entirely by other methods. Alternatives to extrusion cooking include methods such as frying, baking, broiling, grilling, pressure cooking, boiling, ohmic heating, steaming, and the like.

As used herein, "food" refers to any composition intended for oral ingestion, and excludes items which are capable of being swallowed but are generally considered inedible, such as rocks or toys made of inedible polymers like PVC, modified PVC, or vinyl, whether swallowed whole or broken and swallowed in pieces.

As used herein, "porous" refers to a food that is leavened or expanded. Thus, porous foods include many cookies, crackers, biscuits, and breads (inclusive of loafs, rolls, baguettes, etc.). Extruded foods may also be porous. For example, extruded pet foods often comprise a gelatinized starch matrix that is processed to expand during cooking, providing a porous kibble. Other examples of porous, extruded foods include cheese puffs and some breakfast cereals (such as chocolate- or fruit-flavored puffs). Not all extruded foods are porous. For example, most extruded pasta is not porous.

As used herein, the term "extrude" means to process, such as by sending through, an extruder. In one embodiment of extrusion, food is formed by an extrusion process wherein raw materials, typically including starch, can be extruded under heat and pressure to gelatinize the starch and to form a particulate food, such as a pet food kibble or snack or breakfast puffs. Any type of extruder can be used, non-limiting examples of which include single screw extruders and twin-screw extruders.

As used herein, "pet" means dogs, cats, and/or other domesticated animals of like nutritional needs to a dog or a cat. For example, other domesticated animals of like nutritional needs to a cat may include minks and ferrets, who can survive indefinitely and healthfully on a nutritional composition designed to meet the nutritional needs of cats. It will be appreciated by one of skill in the art that dogs and cats have nutritional needs which differ in key aspects. At a fundamental level, dogs are omnivores, whereas cats are obligate carnivores. Further, nutritional needs are not necessarily consistent with phylogenetic or other non-nutritional classifications.

As used herein, "complete and nutritionally balanced" refers to a composition that provides all of a typical animal's nutritional needs when fed according to feeding guidelines for that composition or according to common usage if no feeding guidelines are provided. Such nutritional needs are described, for example, in Nutrient Profiles for dogs and cats published by the Association of American Feed Control Officials (AAFCO).

As used herein, the term "coating" means a partial or complete covering that covers at least a portion of a surface, for example a surface of a food. In one example, a food may be partially covered with a coating such that only part of the food is covered, and part of the food is not covered and is thus exposed. In another example, the food may be completely covered with a coating such that the entire food is covered and thus not exposed. Therefore, a coating may cover from a negligible amount up to the entire surface. A coating can also be coated onto other coatings such that a layering of coatings can be present. For example, a food can be coated with coating A, and coating A can be coated with coating B, such that coating A and coating B each form a layer.

As used herein, the term "bacteriophage" refers to a bacteriophage which is lytic or otherwise harmful to bacteria of one or more undesirable strains. Undesirable bacteria may be or may produce compounds which are potentially pathogenic for humans or animals, or may be associated with spoilage, malodor, aesthetic decline, or other deterioration of a food product colonized by the undesirable bacteria. As used herein, "bacterium" or "target bacterium" refers to an undesirable micro-organism susceptible to infection and lysis, apoptosis, or alternate modes of cell death caused by a bacteriophage. Different strains of bacteriophage may infect different strains of bacteria with different results, or may infect some strains of bacteria but not others.

As used herein, unless otherwise stated for a particular parameter, the term "about" refers to a range that encompasses an industry-acceptable range for inherent variability in analyses or process controls, including sampling error. Consistent with the Model Guidance of AAFCO, inherent variability is not meant to encompass variation associated with sloppy work or deficient procedures, but, rather, to address the inherent variation associated even with good practices and techniques.

The possibility of using bacteriophages to reduce or prevent bacterial growth in food has been previously considered. However, producing a bacteriophage treated food that consistently reduces bacteria counts has been more difficult than supposed. Without wishing to be bound by theory, it is proposed that this difficulty may be related to the non-motile nature of the bacteriophages, particularly when the bacteriophages are incorporated into or applied onto solid foods. Because the bacteriophages do not move after application to a solid surface (aside from possible Brownian motion), they are only effective in reducing bacteria growth if a live bacterium happens to come into contact with the fixed-position bacteriophage. Thus, to be most effective, bacteriophages may be applied in a relatively consistent, small-scale network that will "trap" or "catch" reproducing bacteria before they reproduce to illness-inducing levels.

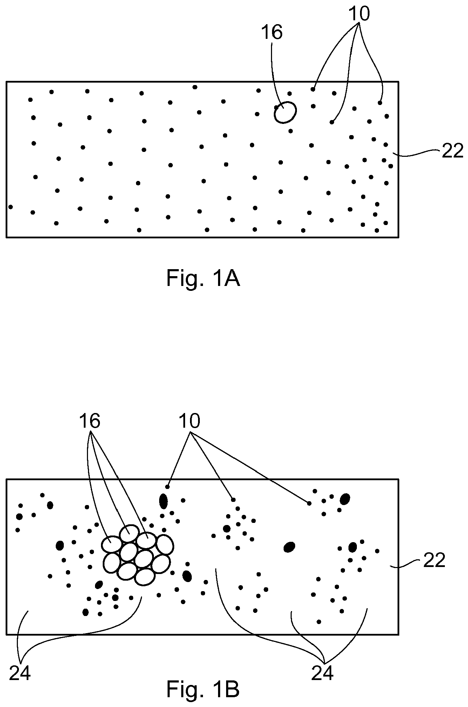

This is shown conceptually in Figs. 1A and IB. Fig. 1A shows an ideal condition, where the average spacing between bacteriophages 10 in or on food 22 is small relative to the size of the target bacterium 16, and the distribution of bacteriophages 10 is sufficiently regular that there are few or no pockets where bacteria 16 could grow unchecked. That is, if bacterium 16 were to reproduce, the colony formed by reproducing bacterium 16 would encounter a bacteriophage 10 before the colony could reach a problematic size. In contrast, Fig. IB shows a condition which may arise using conventional processes, as where bacteriophage 10 is sprayed onto food 22. Using a typical spray-coating process, bacteriophages 10 are applied more or less randomly on the surface of food 22 in the form of irregular droplets of irregular numbers of bacteriophages 10. Thus, pockets 24 can form where the spacing in between droplets of bacteriophages 10 would permit bacteria to grow unchecked, possibly to problematic levels in one or more pocket 24.

The uneven distribution of bacteriophage 10 as shown in Fig. IB may be exacerbated in the very foods most likely to be subjected to spray coating application processes. For example, porous foods like crackers, biscuits, and pet food kibble might not tolerate dipping or soaking processes for applying bacteriophages in liquid solution, as the solution would tend to soak into a porous food. This saturation with liquid solution might ruin the texture of the food. Further, if the bacteriophages in solution are quickly absorbed away from the surface of the food (e.g., pulled at least partially into pores or crevices in the food surface as the coating solution is absorbed into the food), the bacteriophages might not be available at the surface of the food, where the food is most likely to encounter contaminants.

This understanding was developed in part by exploring an intuitive way of applying bacteriophages to porous food products. Crackers, cookies, biscuits, pet food kibble, and the like may be coated with other compositions for aesthetic effect or palatability. For example, washes to give processed foods an appetizing color are common, as are sugar-, protein-, and/or fat-based coatings that may make a food sweeter, saltier, or otherwise more palatable. Further, a wash or coating is often designed to stay on the surface of the food. For example, a food may be less porous and less inclined to absorb a liquid wash before it is cooked, and a wash may be applied a short time before the food is cooked, such that there is less opportunity for the wash to soak into the food than there would be for a liquid bacteriophage solution to soak into the food after it is cooked. As another example, palatability-enhancing coatings often employ components, such as sugars or fats, which are solid or semi-solid at ambient temperatures. By incorporating solid or semi-solid components, any tendency for the coating to soak into a porous food may be reduced, thereby retaining a greater proportion of the coating on the surface of the porous food than if the coating did not contain solid or semi-solid components.

However, the addition of a bacteriophage to a fat-containing coating for a porous food unexpectedly produced inconsistent and frequently inadequate reductions in bacteria counts. In contrast, when bacteriophage was applied separate from a solid or semi-solid coating, the performance was both better and more consistent within and between batches. This is described in greater detail in the description and examples which follow.

In some embodiments, a food may be coated with bacteriophages. The coating comprising the bacteriophage may be liquid at 20°C as applied. For example, the coating comprising the bacteriophage may be an aqueous solution which will evaporate to yield a residue of bacteriophage on the food after coating. The coating solution, as applied, may comprise bacteriophages in a concentration between 1X10² Plaque Forming Units (pfu) per mL and 1X10⁹ pfu/mL or 1X10¹² pfu/mL. The coating solution, after application, may leave a residue of recoverable phage in concentrations between 0.5 log pfu/gram of coated food or 2 log pfu/gram of coated food and 5 log pfu/gram of coated food, or 7 log pfu/gram of coated food.

The food may have a layered coating, with a first coating layer closest to the food surface, and a second coating layer on the first coating layer. The first coating layer may comprise a wax, a fat, sugars, proteins, animal digests, or combinations thereof. The first coating layer may be solid or semi-solid at 20°C. The second coating layer may comprise one or more bacteriophage strains. The coating comprising the bacteriophage strain or strains may be as disclosed throughout this description. In some examples disclosed herein, the first coating layer comprises one or more bacteriophage strains; the second layer comprises a wax, fat, sugars, proteins, animal digests, or combinations thereof; and a third layer comprises one or more bacteriophage strains.
If two or more coating layers comprise bacteriophage strains, the strain or strains in the different coating layers may be the same or different. For example, a piece of fruit may be coated with bacteriophages to reduce the growth of bacteria that may be on the fruit when it is picked, then coated with a thin wax coating, then coated with bacteriophages to reduce the growth of bacteria that may be transferred to the fruit during shipping and handling. The bacteriophages in the first coating may target bacteria common to orchards, including water supplies and soil, where the fruit is grown. The bacteriophages in the second coating may target bacteria common to human hands or processing facilities, as the fruit may be exposed to during sorting, packaging, shipping, and retail display. In this or other embodiments, there may be some kinds of bacteriophages common to two or more distinct coating layers. For example, one coating comprising bacteriophages may comprise 2 or 3 or 4 or 5 or 6 or more distinct bacteriophage strains, and the second coating comprising bacteriophages may comprise 2, or 3, or 4, or 5, or 6, or more distinct bacteriophage strains. Of the distinct strains in each coating layer, none or 1 or 2 or 3 or 4 or 5 or 6 or all of the strains may be the same from layer to layer.

In some embodiments, an aqueous solution comprising one or more bacteriophage strains is applied over a hydrophobic layer, such as a fatty or waxy layer. This order of layering may help spread the bacteriophage solution across the surface of the food, leaving fewer pockets of untreated surface area where bacteria could grow unchecked by the bacteriophages. In some embodiments, the food may be mixed, rubbed, or otherwise contacted with other pieces of bacteriophage coated food to help spread the bacteriophage. Suitable coating/mixing apparatus for mixing the coated food may include continuous and batch process coater/mixers, such as ribbon mixers, paddle mixers, fluidized bed coater/mixers, pan coaters, vibrating coater/mixers, and the like. As described in EXAMPLE 3, below, a vibrating coater/mixer may be particularly efficient in applying and spreading a bacteriophage coating in a manner suitable for achieving high levels of bacterial growth inhibition. Thorough mixing may increase the efficiency of the applied bacteriophage, and permit the use of relatively lower pfus of bacteriophage per gram of food than if the bacteriophage is applied without mechanical spreading, such as mixing.

A vibrating coater/mixer, if used, can be fashioned by adapting a vibrating conveyor. A vibrating conveyor may be linear or planar, but more often is presented as a spiral elevator or vibrating helix. A vibrating conveyor is conventionally used to move particles upward, as from a truck to a silo. Particles are moved along the conveyor by vibration. The conveyor is typically configured to maximize horizontal movement, and the conveyor itself is configured to move particles in the vertical direction. For example, the conveyor may be spiral, such that "horizontal" movement along the conveyor also moves the particles vertically over the length of the conveyor.
In such a configuration, the conveyor and the vibration of the conveyor are configured to minimize vertical movement of the particles relative to the conveyor surface, because such vertical movement is not productive with regard to advancing particles along the conveyor. Thus, regardless of the depth of the conveyor bed, there is little turnover of particles in the vertical or z-direction as they move along the vibrating conveyor. Particles which start at the bottom of the bed tend to reside at or near the bottom of the bed at the end of the conveyor, and particles which start at the top of the bed tend to reside at or near the top of the bed at the end of the conveyor.

In contrast, by changing the vertical amplitude of the vibration, dimensionless acceleration, plug flow (as measured by Peclet number, described below), and/or other parameters, it is possible to tune the vibration of a vibrating conveyor to get regular z-direction or vertical exchange of particles moving horizontally along the vibrating conveyor. Combined with one or more coating locations along the path of the vibrating conveyor, this z-direction movement can be used to coat particles in a continuous process. By tuning the vibration, more or less uniform coatings may be applied all around the particles. That is, because the particles are moving in the z-direction, a coating may be spread to most or all of the surface of the particles without batch mixing, as in a paddle mixer. Further, because the particles change position relative to one another in the z-direction, it is possible to coat multiple surfaces of multiple layers of particles, unlike in conventional spray coating, which coats one side or one surface of a single layer of particles.

Thus, by reconfiguring the vibrating conveyor to achieve the desired level of z-direction movement and particle exchange, it may be possible to achieve more regular, even coating of a larger number of particles than is possible using a conventional coating apparatus of comparable size and mass flow. This may help provide consistent, even dosing of active coating ingredients, such as bacteriophages. If multiple coating dispensers are used along the path of the vibrating conveyor, it is possible to get multiple layers of predictable, uniform coatings over most or all of the surface area of a particle or piece of food. By adjusting the settings on the vibrating conveyor, this coating/mixing process can be used even with relatively fragile products, such as fresh fruit or brittle processed foods. Further, by varying the type, number, and placement of coating dispensers along the vibrating conveyor, it is possible to provide thick coatings (as by applying more of the same coating at different points along the conveyor) and/or complex coatings (for example, layers of different coatings in different volumes, weights, or thicknesses).

For a vibrating conveyor, process parameters can be varied to provide desired coating and mixing properties. These process parameters, as described below, may include, but are not limited to, level of fill of the vibrating bed, flow rate through the vibrating bed, vibration amplitude, vibration frequency location of the addition points of the liquid coating, location of the addition points of the solid coating, order or sequence of the coating addition, pattern of spray of the nozzle for the liquid coating, droplet size of the liquid coating, and particle size of the solid.

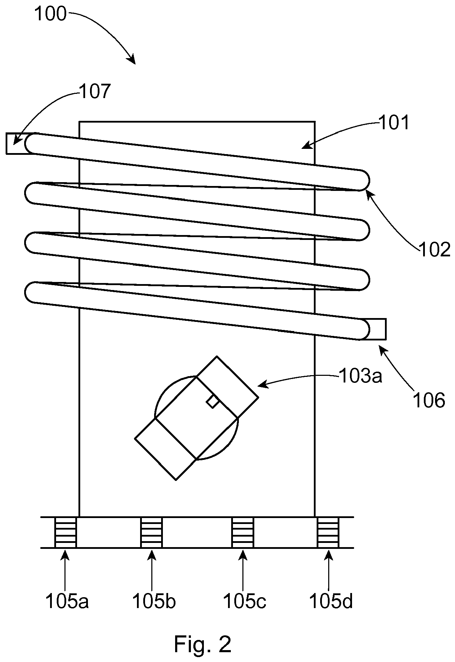

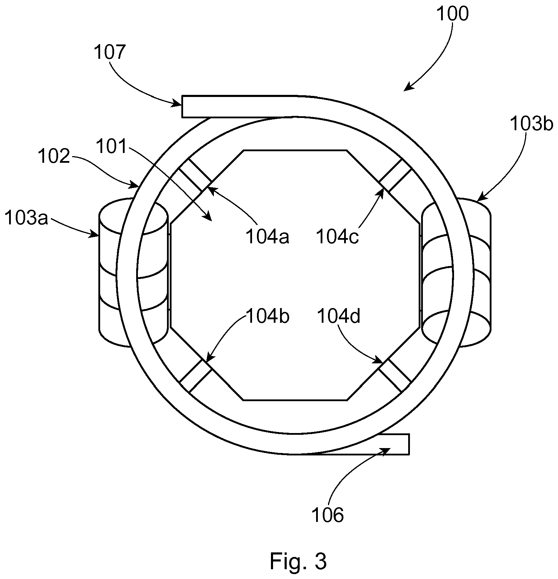

A side view of one embodiment of a non-limiting example of a spiral, vibrating conveyor is shown in FIG 2, and a top view of one exemplary embodiment of a spiral, vibrating conveyor is shown in FIG 3. A pipe 102 is wound in a helix, or coil, around a central column 101 and mounted to the column by a set of supports 104a, 104b, 104c, and 104d. The central column 101 rests on a set of shock absorbers 105a, 105b, 105c, and 105d. Two electric motors 103a and 103b with rotating weights (not shown) are mounted on either side of the column 101. The motors 103a and 103b are mounted at an angle with respect to horizontal. A typical angle may be 45 degrees. The motors 103a and 103b are offset from each other by 90 degrees. The motors 103a and 103b impart a vertical vibration component and a horizontal vibration component to the column 101. The column 101, in turn, imparts these vibration components to the helical pipe. The magnitude of both the vertical and horizontal vibrations is determined by the frequency of the motor, the size, shape, and position of the weights, the power of the motor, and the angle of the motor relative to horizontal. Food particles are fed into the helical pipe at the product entrance (106). The vertical vibration of the pipe 102 causes the food to bounce up and down within the pipe 102, essentially fluidizing the food (with respect to the movement of the food, not necessarily with respect to the constitution of the food or food particles). The horizontal vibration of the pipe 102 causes the food to proceed up and through the pipe. The food then exits the pipe at the product exit 107.

As shown in FIG 2, pipe 102 provides the channel for the flow of materials, such as food. While a pipe is shown, any shape and dimension of vibrating conveyor can be used. Thus, in one embodiment, the vibrating conveyor comprises a channel having an inlet and an outlet. The channel, as described, can be of several types of cross sections. In certain embodiments, the channel can have a substantially round cross-section. In certain embodiments, the channel can have a substantially rectangular cross-section. In certain embodiments, the channel can have a substantially rectangular cross-section with a dished bottom.

In one embodiment, the channel can have a particular diameter. In one embodiment, the diameter of the channel can be at least four times as large as the ESD of the food particles. In one embodiment in which a pipe is used for the channel, and in which a pipe can be considered a substantially round cross-section, the pipe can have a diameter of about 8 inches, or about 1 to about 20 inches, or about 5 to about 15 inches. However, any diameter of pipe can be used.

In one embodiment, the vibrating conveyor can have particular number of coils, as shown in FIG 2. In one embodiment, the vibrating conveyor can have a single coil. In one embodiment, the vibrating conveyor can have more than one coil. In one embodiment, the vibrating conveyor can have two coils, or three coils or four coils or eight coils, or up to about 30 coils. Partial coils are also envisioned.

The vibrating conveyor can be made of stainless steel. In one embodiment, the vibrating conveyor can be made of 316 stainless, or 304 stainless, or 316L stainless. Other materials may be used.

Thus, the vibrating conveyor can be used to apply bacteriophages or other coatings to the food. The food may be introduced at one end of the conveyor. The vibration of the bed of the conveyor causes the food to fluidize, and, at the same time, the food moves forward through the conveyor. The continuous flow of food into the conveyor and the continuous flow of food out of the conveyor may be adjusted so that the flows are mass balanced and steady state, and the amount of food at any one time inside the mixer is approximately constant. A suitable vibrating conveyor may be obtained, for example, from Carrier Vibrating Equipment of Louisville, Kentucky, USA, and Carman Industries of Jeffersonville, Indiana, USA.

The vibrating conveyor can be operated to adjust particular properties of the particles being transported through the vibrating conveyor. In one embodiment, the dimensionless acceleration number of the particles can be affected. In operation, the dimensionless acceleration number is the ratio of the upward acceleration of the particles due to the vibration of the bed of the conveyor divided by the downward acceleration due to gravity. The dimensionless acceleration number can be expressed as the product of the vibration frequency squared times the vertical amplitude of the vibration divided by the gravitational constant. Thus, the equation for the dimensionless acceleration number can be represented as follows: ω²a/g, where "ω" is the vibration frequency, "a" is the vertical amplitude of vibration, and "g" is the gravitational constant.

In one embodiment, the conveyor can be operated so that the dimensionless acceleration number can be greater than about 0.3. In one embodiment, the conveyor can be operated so that the dimensionless acceleration number can be greater than about 1. In one embodiment, the conveyor can be operated so that the dimensionless acceleration number can be between about 0.5 and about 2, or from about 0.5 to about 1.5, or from about 0.5 to about 5, or from about 1 to 4.

In one embodiment, the conveyor can be operated so that the average vertical amplitude of vibration can be greater than about 3 mm. In one embodiment, the conveyor is operated so that the average vertical amplitude of vibration can be between about 3 mm and about 20 mm, or between about 5 mm and about 20 mm, or about 7 mm to about 15 mm. Greater vertical amplitude of vibration causes the particles in the bottom layer of flow to circulate upward into the flow of the coating material being applied to the particles. This circulation helps provide more even coating of the particles.

As used herein, bed depth is defined as the distance between the top of the bed of particles in the conveyor to the bottom of the bed. In the case of a vibrating conveyor using a trough type conveying device, the bottom of the bed would be measured at the deepest point in the trough. In one embodiment, the bed depth can be from about 0.5 cm to about 15 cm, or from about 3.5 cm to about 12 cm, or from about 5 cm to about 10 cm.

In one embodiment, as depth of the bed of particles flowing through the conveyor increases, the amplitude can increase as well to help provide more even coating of the particles. Thus, in one embodiment, the ratio of the vertical amplitude of vibration to the bed depth can be between about 0.01 to about 1. In one embodiment, the ratio of the average vertical amplitude of vibration to the bed depth can be between about 0.1 to about 0.5, or from about 0.1 to about 0.3, or about 0.2. Without being limited by theory, it is thought that maintaining this ratio can lead to better mixing and coating of the particles.

In one embodiment, the frequency of vibration may be from about 1 to about 100 Hz. In one embodiment, the frequency of vibration may be from about 1 to about 50 Hz, or from about 1 to about 20 Hz, or from about 1 to about 10 Hz or about 5 Hz., or about 5 to about 15 Hz or about 10 Hz.

In one embodiment, the vibrating conveyor can be operated such that the ratio of the amplitude of vertical vibration to the ESD of the food can be from about 0.5:1 to about 3:1, or from about 1:1 to about 2:1, or from about 1.5:1, such that the operation of the vibrating conveyor moves the food from the inlet to the outlet of the vibrating conveyor.

It may be desirable that the flow of the core material through the vibrating conveyor be substantially plug flow. Plug flow is defined as the minimization of axial mixing. Axial mixing is defined as the tendency of an aliquot of core materials to spread away from one another in the direction of the mass flow of the core material. When flow of the core material is substantially plug flow, different particles are each in the vibrating conveyor for approximately the same amount of time. With increasing axial mixing, the times that the particles spend in the vibrating conveyor can vary somewhat, possibly resulting in more uneven coating from one particle to another. The amount of axial mixing in a vibrating conveyor can be calculated according to the method described in Levenspiel's "Chemical Reaction Engineering", 3rd edition. The Peclet number is a measurement of the amount of axial mixing and degree of plug flow. The Peclet number is a dimensionless number that is the ratio of the bulk flow of the particles to the axial mixing along the length of the vibrating conveyor in the direction of particle flow. The larger the Peclet number, the better the plug flow. Higher Peclet numbers may result in more even coating of the particles. In one embodiment, the vibrating conveyor can be operated so that the Peclet number is greater than about 6. In one embodiment, the vibrating conveyor is operated so that the Peclet number is greater than about 100. In one embodiment, the vibrating conveyor is operated so that the Peclet number is greater than about 1000. In one embodiment, the vibrating conveyor is operated so that the Peclet number is greater than about 10000.

In some embodiments, the size of the droplets of solution containing bacteriophage applied to the food is controlled. For example, the bacteriophage may be spray coated onto the food by fog misting or aerosol application, rather than other spraying methods with larger or less regular droplet sizes. Smaller droplet sizes may help disperse the bacteriophage across the surface of the food. In some embodiments, fog misting or aerosol application are used in a port in a vibratory conveyor or other coating or coating/mixing apparatus.

In some embodiments, the food is heated prior to application of the bacteriophage. The food may be heated, for example, to 100-120°F, or 105-110°F. In some embodiments, the food is heated in a prior processing step, such as extrusion cooking, and is still warm during application of the bacteriophage. In some embodiments, the food is not heated, or is at ambient temperature, during application of the bacteriophage.

In some embodiments, the bacteriophage coating solution (i.e., prior to application to the food) may have a pH between 2 and 12, or between 5 and 7. In some embodiments, a coating layer comprising a bacteriophage (e.g., after the coating dries or sets on the food) may have a pH between 2 and 10, or between 4.0 and 6.5, or between 2 and 6.5, or between 4 and 10. To maintain this pH, it may be desirable to add low-pH additives to the food itself rather than in a coating layer (e.g., as part of the dough or batter in a processed food), or to a coating layer which does not include a bacteriophage. Exemplary low-pH additives include acids and some protein digests, as may be used as preservatives or palatants. Specific exemplary low-pH additives include formic acid, acetic acid, propionic acid, butyric acid, lactic acid, sorbic acid, fumaric acid, malic acid, tartaric acid, citric acid, phosphoric acid, ascorbic acid, sulfuric acid, hydrochloric acid, or combinations thereof.

In some embodiments, the coating solution comprising a bacteriophage may further comprise positively charged compounds, such as tryptophan, lysine, or certain divalent cations (e.g., calcium, magnesium), or combinations thereof. Bacteria tend to be negatively charged, so adding positively charged elements to the bacteriophage coating solution may help associate the bacteriophage particles with nearby host bacteria. In some embodiments, the coating solution comprising a bacteriophage may further comprise a source of nutrition for the target bacteria, such as carbohydrate (e.g., monosacharides), nucleotides (e.g., purines, pyrimadine), polymerase cofactor (e.g., manganese), or combinations thereof. It may be helpful for a bacterium infected by a bacteriophage particle to have adequate resources to replicate many bacteriophage particles before the bacteria lyses and dies. In this way, the number of bacteriophages available to intercept potentially harmful bacteria may increase with each bacteriophage-bacterium interaction. In this regard, polymerase cofactor and nucleotides may be particularly helpful, as these are nutrients which are specifically required for the host bacterium to manufacture new phage particles.

Suitable bacteriophages may be selected based on the food and the pathogenic bacteria of interest. For example, for pet food kibble, *Salmonella* is a particular concern. *Salmonella* is common in chicken and chicken meal, which are common ingredients in dry or semi-moist pet food kibble. *Salmonella* is typically killed during food production, but because materials often handled in the plant may contain *Salmonella,* there is a chronic risk of contaminating finished product. Even tiny numbers of *Salmonella* bacteria can be problematic, as nutrient-rich food, such as pet food kibble, may be hospitable to bacterial growth. Exemplary bacteriophages that are lytic for certain species or strains of *Salmonella* (or other bacteria) include those described in U.S. Patent No. 7,674,467; U.S. Patent No. 7,211,426; U.S. Patent No. 7,951,575; U.S. Patent No. 8,021,657; and U.S. Patent Application Publication No. 2010/0166709. Other bacteriophages and their target bacterium or bacteria are known in the literature and can be selected for a specific food and target bacteria by one of ordinary skill in the art.

In some embodiments, the bacteriophages are or include bacteriophages of the Siphoviridae, Podoviridae, or Myoviridae families, or combinations thereof. The bacteriophages may be wild-type or genetically modified or combinations thereof. The bacteriophages may be infective and lytic or otherwise fatal with respect to at least one species or strain of bacteria of the genus *Streptococcus, Enterobacterium, Escherichia, Salmonella, Listeria, Shigella, Campylobacter* or combinations thereof.

The food may be any food which is susceptible to colonization by undesirable bacteria. The food may be a raw food, such as fresh fruits or vegetables, or a processed food, such as cookies, biscuits, crackers, bread, or pet food. The food may be porous. The coatings and methods described herein may be particularly, but not exclusively, useful with porous foods because porous foods may be incompatible with certain other kinds of coating processes, such as dipping or bathing. The food may be extruded. In one specific, non-limiting embodiment, the food is a porous, extruded pet food. The pet food may be complete and nutritionally balanced, or the pet food may be a supplement or treat, such as a biscuit, cookie, tidbit, edible chew, or the like. The pet food may be dry or semi-moist. The food may be suitable for human consumption, or non-human animal consumption, or pet consumption, or suitable for any animal. The food may be destined for further processing or the application of a bacteriophage coating may be the final processing step (excluding possible additional shipping or handling) before the food is sold and/or consumed. The food may comprise a variety of other coatings or coating ingredients, including, but not limited to, dry or liquid palatants, fats, sugars, salt or salt alternatives, probiotics, prebiotics, vitamins (particularly, but not exclusively, Vitamins A, C, D, or E), minerals, caloric restriction mimetics (such as mannoheptulose), 1-carnitine, alpha-lipoic acid, polyphenols, catechins, carotenoids, aromatics, natural or artificial preservatives, acids, amino acids, proteins, digests (as of animal protein sources), medicaments, colorants, omega-3 fatty acids (particularly, but not exclusively, eicosapentaenoic acid (EPA) and/or docosahexanoic acid (DHA)) and the like, or combinations thereof. Other coatings or coating ingredients may be isolated from the bacteriophages or bacteriophage coating layer, as described above.

The following examples illustrate some aspects of the invention.

### EXAMPLE 1

Fat, a palatant (animal protein digest), and a test compound were separately metered into a SILVERSON high shear mixer/pump and combined into a coating solution. There were four legs in the study, each with a different test compound:
Leg 1: Water without phage applied at 2% of the kibble, by weight of water to weight of kibble.
Leg 2: A bacteriophage cocktail in 1:100 dilution applied at 2% of the kibble, by weight of water to weight of kibble.
Leg 3: The same bacteriophage cocktail in 1:10 dilution applied at 2% of the kibble, by weight of water to weight of kibble.
Leg 4: The same bacteriophage cocktail in 1:10 dilution applied at 1% of the kibble, by weight of water to weight of kibble.

In each Leg, the initial strength of the phage solution was approximately 1X10¹⁰ Plaque Forming Units (pfu)/mL solution. The coating solution was transferred to an APEC enrobing system, and applied to extrusion-cooked pet food kibble. Following coating, a 375 gram sample of kibble was inoculated with approximately 25 Colony Forming Units (cfu) per gram of bacteria of the genus *Salmonella.* None of the four legs showed a meaningful reduction in the challenge *Salmonella* species, as measured by a MicroSEQ™ identification system according to the manufacturer's instructions. However, viable phase were recovered from samples from Legs 2-4, indicating that viable phage were present on the coated kibble. Without wishing to be bound by theory, it was hypothesized that the fat-and-palatant carrier was acting as a physical barrier between the applied bacteriophages and the challenge organisms.

### EXAMPLE 2

Extrusion-cooked kibble of the same type in EXAMPLE 1 were placed in a pan coater. In some cases, the kibble was enrobed in a fat-containing coating, and in some cases the kibble was un-enrobed (or un-coated). The kibble, even if previously enrobed, was brought up to customary enrobing temperature of 105-110°F, and, if applicable, enrobed with a fat and digest coating. The fat and digest were the same as in EXAMPLE 1.

After enrobing, the kibble was sprayed with a solution as follows:
Leg 1: Previously enrobed kibble was spray coated with 2% of Reverse Osmosis and DeIonized (rodi) water and tumbled in a pan coater for 5 minutes (control condition)
Leg 2: Previously enrobed kibble was spray coated with 2% of 10% phage solution and tumbled in a pan coater for 10 minutes
Leg 3: Previously enrobed kibble was spray coated with 2% of 10% phage solution and tumbled in a pan coater for 13 seconds
Leg 4: Non-enrobed kibble was enrobed with fat and digest, sprayed with 2% rodi water, and tumbled in a pan coater for 7 minutes (CONTROL)
Leg 5: Non-enrobed kibble was enrobed with fat and digest, tumbled in a pan coater for 30 seconds, spray coated with 2% of 10% phage solution, and tumbled in a pan coater for 10 minutes
Leg 6: Non-enrobed kibble was enrobed with fat and digest, tumbled in a pan coater for 20 seconds, spray coated with 2% of 10% phage solution, and immediately sampled (no additional tumbling after phage application)
Leg 7: Non-enrobed kibble was enrobed with fat and digest, tumbled in a pan coater for 5 minutes, spray coated with 2% of 10% phage solution, and tumbled in a pan coater for 10 minutes
Leg 8: Non-enrobed kibble was enrobed with fat and digest, tumbled in a pan coater for 5 minutes, spray coated with 2% of 10% phage solution, and immediately sampled (no additional tumbling after phage application)
Leg 9: A laboratory control, in which 375g of kibble was treated with 10.5mL of undiluted phage solution

A sample of 375g of kibble was taken from each leg, and mixed with 25 cfu *Salmonella* per gram of kibble. A sample of 25g of the *Salmonella*-treated kibble from each leg was incubated in 225mL of Buffered Peptone Water (BPW) for 20 hours at 33°C. Samples of the growth media were then submitted for quantitative enumeration. The results are shown in Fig. 2 and expressed as the average log recovery of *Salmonella* per gram kibble following enrichment.

Surprisingly, when compared to the results of EXAMPLE 1, the quantitative enumeration showed a greater than 3 log reduction in cfu of *Salmonella* when the phage is applied as described in Legs 2-8 compared to the control condition of Leg 1. Leg 4 was also designed to be a control condition. After preparing the kibble of Leg 3, and before preparing the kibble of Leg 4, the production equipment was cleaned with SurpHase pHresh (pH<1) and 70% alcohol. One small utensil was overlooked during this cleaning step between experimental legs. The reduction in *Salmonella* in Leg 4 is believed to be attributable to the transfer of the residual phage on this small utensil to the kibble in Leg 4.

### EXAMPLE 3

Ambient temperature, unenrobed pet food kibble was fed into a vibratory conveyor adapted for use as a coating apparatus as described in U.S. Patent Application No. 13/349,816, filed on January 13, 2012. Fat was applied through two ports, digest was applied at a third port, and bacteriophage was applied at a fourth port, resulting in a layered coating of fat, digest, and bacteriophage. Coated kibble was mixed and rubbed together through the vibration of the conveyor for approximately two windings (approximately 30 seconds of tumbling). Kibble samples were collected, inoculated with *Salmonella,* and enriched as in EXAMPLE 2. Three legs were run:
Leg 1: Water (no phage) was applied at 2% of the kibble weight.
Leg 2: Bacteriophage, 1X10⁹ phage per mL of solution, was applied at 2% of the kibble weight.
Leg 3: Bacteriophage, 1X10⁹ phage per mL of solution, was applied at 1% of the kibble weight.

Compared to Leg 1, Leg 2 showed a 4.01 log reduction in *Salmonella* following enrichment, and Leg 3 showed a 2.96 log reduction in *Salmonella* following enrichment. A sample was also taken 5 minutes after the phage application through the fourth point was discontinued, and active phage was recovered from those samples. In addition, samples taken 5 minutes after phage application was discontinued were subjected to *Salmonella* challenge and enrichment, and showed a 1.67 log reduction relative to Leg 1. This observation supports the hypothesis that the quantitative enumeration results of Leg 4 of EXAMPLE 2 may be attributed to residual phage on a processing implement. This observation also shows that relatively low concentrations of applied bacteriophage may still be helpful in controlling bacterial load on food. Recoverable phage in Leg 2 was approximately 4.5 log pfu/g of coated kibble. Recoverable phage in Leg 3 was approximately 4.0 log pfu/g of coated kibble. Recoverable phage in the samples taken 5 minutes after phage application was discontinued was approximately 1.0 log pfu/g of coated kibble.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A food treated with a bacteriophage, the treated food comprising:
a food product;
a first, fatty or waxy coating layer on the food product; and
a second coating layer comprising one or more bacteriophage strains,
wherein the fatty or waxy coating layer is distinct from the coating layer comprising the one or more bacteriophage strains,
wherein the coating layer comprising the one or more bacteriophage strains is the outermost coating layer on the food.

2. The food of claim 1, wherein the food comprises a third coating layer, the third coating layer comprising one or more bacteriophage strains.

3. The food of claim 2, wherein the second coating layer is closest to the food surface, the first, fatty or waxy coating layer is disposed on top of the second coating layer, and the third coating layer is disposed on top of the first coating layer.

4. The food of any one of the preceding claims, wherein the food is a pet food.

5. The food of any one of the preceding claims, wherein at least one of the one or more bacteriophage strains is of the family *Siphoviridae, Podoviridae,* or *Myoviridae.*

6. The food of any one of the preceding claims, wherein at least one of the one or more bacteriophage strains is infective and harmful with respect to at least one species or strain of bacteria of a genus selected from the group consisting of *Streptococcus, Enterobacterium, Escherichia, Salmonella, Listeria, Shigella, Campylobacter* and combinations thereof.

7. The food of any of one the preceding claims, wherein at least one of the one or more bacteriophage strains is of the family *Myoviridae* and is infective and harmful with respect to at least one species or strain of *Salmonella* bacteria.

8. The food of any one of the preceding claims, wherein the coating comprising the one or more bacteriophage strains has a pH between 2 and 10.

9. The food of any one of the preceding claims, wherein the food comprises a coating layer comprising animal digest or an acid, and the animal digest or acid is not within the coating layer comprising the one or more bacteriophage strains.

10. A method for applying bacteriophage to a food, the method comprising:
providing a food;
providing a coating solution comprising one or more bacteriophage strains;
applying a hydrophobic, fatty or waxy coating layer before contacting the coating solution with the food; and
subsequently contacting the coating solution with the food to create a coated food surface; and rubbing the coated food surface to distribute the bacteriophage strains across the coated food surface.

11. The method of claim 10, wherein the rubbing is performed by mixing a plurality of pieces of coated food such that the coated food surfaces rub together.

12. The method of claim 10, wherein the contacting and/or the rubbing is performed in a vibrating conveyor.

13. The method of claim 12, wherein the vibrating conveyor is operated to provide a dimensionless acceleration number greater than about 0.3, an average vertical amplitude of vibration between about 3mm and about 20mm, and a Peclet number greater than about 100.

## Patentansprüche

1. Mit einem Bakteriophagen behandeltes Lebensmittel, wobei das behandelte Lebensmittel Folgendes umfasst:
ein Lebensmittelprodukt;
eine erste fettartige oder wachsartige Beschichtung auf dem Lebensmittelprodukt; und
eine zweite Beschichtung umfassend einen oder mehrere Bakteriophagen-Stämme,
wobei sich die fettartige oder wachsartige Beschichtung von der Beschichtung unterscheidet, die den einen oder die mehreren Bakteriophagen-Stämme umfasst,
wobei die Beschichtung, umfassend den einen oder die mehreren Bakteriophagen-Stämme die äußerste Beschichtung auf dem Lebensmittel ist.

2. Lebensmittel nach Anspruch 1, wobei das Lebensmittel eine dritte Beschichtung umfasst, wobei die dritte Beschichtung einen oder mehrere Bakteriophagen-Stämme umfasst.

3. Lebensmittel nach Anspruch 2, wobei die zweite Beschichtung der Lebensmitteloberfläche am nächsten ist, die erste fettartige oder wachsartige Beschichtung auf der zweiten Beschichtung angeordnet ist, und die dritte Beschichtung auf der ersten Beschichtung angeordnet ist.

4. Lebensmittel nach einem der vorhergehenden Ansprüche, wobei das Lebensmittel ein Haustierfutter ist.

5. Lebensmittel nach einem der vorhergehenden Ansprüche, wobei mindestens einer des einen oder der mehreren Bakteriophagen-Stämme aus der Familie *Siphoviridae, Podoviridae* oder *Myoviridae* stammt.

6. Lebensmittel nach einem der vorhergehenden Ansprüche, wobei mindestens einer des einen oder der mehreren Bakteriophagen-Stämme infektiös und schädlich ist in Bezug auf eine Spezies oder einen Stamm von Bakterien einer Gattung, ausgewählt aus der Gruppe, bestehend aus *Streptococcus, Enterobacterium, Escherichia, Salmonella, Listeria, Shigella, Campylobacter* und ihren Kombinationen.

7. Lebensmittel nach einem der vorhergehenden Ansprüche, wobei mindestens einer des einen oder der mehreren Bakteriophagen-Stämme aus der Familie *Myoviridae* stammt und in Bezug auf mindestens eine Spezies oder einen Stamm von Salmonella-Bakterien infektiös und schädlich ist.

8. Lebensmittel nach einem der vorhergehenden Ansprüche, wobei die Beschichtung, umfassend den einen oder die mehreren Bakteriophagen-Stämme, einen pH zwischen 2 und 10 hat.

9. Lebensmittel nach einem der vorhergehenden Ansprüche, wobei das Lebensmittel eine Beschichtung umfasst, welche tierisches Extrakt oder eine Säure aufweist, und das tierische Extrakt oder die Säure sich nicht in der Beschichtung mit dem einen oder den mehreren Bakteriophagen-Stämmen befindet.

10. Verfahren zum Auftragen eines Bakteriophagen auf ein Lebensmittel, wobei das Verfahren Folgendes umfasst:
Bereitstellen eines Lebensmittels;
Bereitstellen einer Beschichtungslösung, umfassend einen oder mehrere Bakteriophagen-Stämme;
Auftragen einer hydrophoben, fettartigen oder wachsartigen Beschichtung, bevor die Beschichtungslösung mit dem Lebensmittel in Kontakt kommt; und anschließend Inkontaktbringen der Beschichtungslösung mit dem Lebensmittel, um eine beschichte Lebensmitteloberfläche herzustellen; und Reiben der beschichteten Lebensmitteloberfläche, um die Bakteriophagen-Stämme über die beschichte Lebensmitteloberfläche zu verteilen.

11. Verfahren nach Anspruch 10, wobei das Reiben durch Mischen einer Vielzahl von Teilchen des beschichteten Lebensmittels durchgeführt wird, so dass die beschichteten Lebensmitteloberflächen aneinanderreiben.

12. Verfahren nach Anspruch 10, wobei das Inkontaktbringen und/oder Reiben in einem Schwingförderer durchgeführt wird.

13. Verfahren nach Anspruch 12, wobei der Schwingförderer betrieben wird, um eine dimensionslose Beschleunigungszahl größer als etwa 0,3, eine durchschnittliche vertikale Vibrationsamplitude zwischen etwa 3 mm und etwa 20 mm und eine Peclet-Zahl größer als etwa 100 bereitzustellen.

## Revendications

1. Aliment traité avec un bactériophage, l'aliment traité comportant:
un produit alimentaire;
une première couche de revêtement grasse ou cireuse sur le produit alimentaire; et
une seconde couche de revêtement comportant une ou plusieurs souches de bactériophages,
la couche de revêtement grasse ou cireuse étant distincte de la couche de revêtement comportant l'une ou plusieurs souches de bactériophages,
la couche de revêtement comportant l'une ou plusieurs souches de bactériophages étant la couche de revêtement la plus extérieure sur le l'aliment.

2. Aliment selon la revendication 1, l'aliment comportant une troisième couche de revêtement, la troisième couche de revêtement comportant une ou plusieurs souches de bactériophages.

3. Aliment selon la revendication 2, la seconde couche de revêtement étant la plus proche de la surface de l'aliment, la première couche de revêtement grasse ou cireuse étant disposée sur la seconde couche de revêtement et la troisième couche de revêtement étant disposée sur la première couche de revêtement.

4. Aliment selon l'une quelconque des revendications précédentes, l'aliment étant un aliment pour animaux.

5. Aliment selon l'une quelconque des revendications précédentes, au moins une de l'une ou plusieurs souches de bactériophages étant de la famille de *Siphoviridae, Podoviridae* ou *Myoviridae.*

6. Aliment selon l'une quelconque des revendications précédentes, au moins une de l'une ou plusieurs souches de bactériophages étant infectueuse et nuisible par rapport à au moins une espèce ou une souche de bactéries d'un genre choisi parmi le groupe consistent en *Streptococcus, Enterobacterium, Escherichia, Salmonella, Listeria, Shigella, Campylobacter* et leurs combinaisons.

7. Aliment selon l'une quelconque des revendications précédentes, au moins une de l'une ou plusieurs souches de bactériophages étant de la famille de *Myoviridae* et étant infectueuse et nuisible par rapport à au moins une espèce ou une souche de bactéries de *Salmonella.*

8. Aliment selon l'une quelconque des revendications précédentes, le revêtement comportant l'une ou plusieurs souches de bactériophages ayant une valeur pH entre 2 et 10.

9. Aliment selon l'une quelconque des revendications précédentes, l'aliment comportant une couche de revêtement comportant un digestat animal ou un acide, et le digestat animal ou l'acide n'étant pas dans la couche de revêtement comportant l'une ou plusieurs souches de bactériophages.

10. Procédé pour appliquer le bactériophage à un aliment, le procédé comportant:
fournir un aliment;
fournir une solution de revêtement comportant une ou plusieurs souches de bactériophages;
appliquer une couche de revêtement hydrophobe, grasse ou cireuse avant la mise en contact de la solution de revêtement avec l'aliment; et ensuite mettre en contact la solution de revêtement avec l'aliment pour créer une surface revêtue de l'aliment; et frotter la surface revêtue de l'aliment pour distribuer les souches de bactériophages sur la surface revêtue de l'aliment.

11. Procédé selon la revendication 10, le frottement étant effectué en mélangeant une pluralité de pièces de l'aliment revêtu de sorte que les surfaces revêtues de l'aliment frottent l'une contre l'autre.

12. Procédé selon la revendication 10, la mise en contact et/ou le frottement étant effectué dans un convoyeur oscillant.

13. Procédé selon la revendication 12, le convoyeur oscillant étant exploité pour fournir un nombre d'accélération sans dimension supérieur à environ 0,3, une amplitude moyenne verticale de vibration entre environ 3 mm et environ 20 mm et un nombre de Péclet supérieur à environ 100.
